# FASCICULE DE BREVET EUROPEEN

(11) **EP 3 919 895 B1**
(45) Date de publication et mention de la délivrance du brevet: **26.02.2025**
(21) Numéro de dépôt: 21170592.6
(22) Date de dépôt: 27.04.2021
(51) Int. Cl.: G01N 21/88, G01N 21/95

(54) **SYSTEME DE VISUALISATION DE BULLES SOUS UNE FEUILLE ADHESIVE**
SYSTEM ZUR SICHTBARMACHUNG VON BLASEN UNTER EINER KLEBEFOLIE
SYSTEM FOR DISPLAYING BUBBLES UNDER AN ADHESIVE SHEET

(30) Priorité: 19.05.2020 FR 2004983
(43) Date de publication de la demande: 08.12.2021
(73) Titulaire: AIRBUS OPERATIONS (S.A.S.), 31060 Toulouse (FR); Airbus (S.A.S.), 31700 Blagnac (FR)
(72) Inventeur: GARCIA HALLO, Ivan, 31060 TOULOUSE (FR); CATURLA, Jean-Pascal, 31060 TOULOUSE (FR); VIALATTE, Jean-Luc, 31060 TOULOUSE (FR); NOUVET, Julien, 31700 BLAGNAC (FR); DOS REIS, Michel, 31060 TOULOUSE (FR); LEFEBVRE ALBARET, François, 31060 TOULOUSE (FR); THOMPSON, Robert, Ray, MOBILE (US)
(74) Mandataire: Sarraméa, Claude

(56) Documents cités:
- WO-A1-2014/184337
- JP-A- 2000 321 210
- US-A- 6 088 116
- US-A1- 2015 215 584

## Description

### DOMAINE TECHNIQUE

La présente invention concerne un système de visualisation qui permet de visualiser une bulle présente sous une feuille adhésive, ainsi qu'un procédé de visualisation mettant en œuvre un tel système de visualisation.

### ETAT DE LA TECHNIQUE ANTERIEURE

Dans de nombreuses installations, comme par exemple dans un aéronef, il existe des panneaux qui sont recouverts d'une feuille adhésive. Une telle feuille adhésive a principalement une fonction esthétique pour cacher le panneau qui est dessous.

Malgré le soin apporté au collage d'une telle feuille adhésive, il arrive qu'une bulle d'air soit emprisonnée entre le panneau et la feuille adhésive, ce qui entraîne un défaut esthétique devant être corrigé.

Dans le cadre d'un aéronef, une telle bulle peut apparaître après le premier vol lorsque la pression devient inférieure à la pression au sol. Il est alors nécessaire d'effectuer une réparation au sol et d'effectuer un nouveau vol pour vérifier que toutes les bulles détectées ont bien disparu.

Cette démarche est alors relativement coûteuse et il est souhaitable de trouver un moyen pour détecter la présence des bulles avant le premier vol, ou pour vérifier que les défauts esthétiques éventuellement présents (présence de bulles d'air qui apparaissent lors du premier vol de l'aéronef) ont bien été corrigés (lors d'une réparation au sol, après le premier vol) sans nécessiter d'effectuer un nouveau vol.

Il est connu du document US 6 088 116 A un système et un procédé permettant de mesurer la qualité de l'aspect de finition d'une surface réfléchissante. Le système est placé sur la surface réfléchissante à mesurer. Le système comporte une enveloppe opaque, ainsi qu'un joint qui est disposé en contact avec la surface réfléchissante. Un utilisateur regarde à travers un hublot le reflet sur la surface réfléchissante d'un objet de test éclairé.

Il est également connu du document WO 2014/184337 A1 un système d'inspection optique comportant une tête de capteur optique comprenant un dispositif de capture d'image permettant de capturer des images d'un objet à inspecter, et un système d'éclairage comprenant une pluralité de sources de lumière permettant d'éclairer le champ de vision du dispositif de capture d'image.

Il est également connu du document US 2015/215584 un équipement d'évaluation non destructive d'une structure utilisant des moyens d'amplification de mouvement basé sur une vidéo acquise d'une surface de la structure, de manière à détecter des défauts sous la surface de la structure.

### EXPOSE DE L'INVENTION

Un objet de la présente invention est de proposer un système de visualisation qui permet de visualiser l'éventuelle présence d'une bulle présente sous une feuille adhésive.

A cet effet, est proposé un système de visualisation comportant :
- une cloche comportant au moins une paroi latérale et un plafond fixé en partie haute de la paroi latérale pour délimiter entre eux un volume intérieur où la cloche présente une ouverture à l'opposé du plafond,
- un moyen de dépression configuré pour réaliser une dépression dans le volume intérieur,
- un moyen de capture agencé au niveau du plafond et dont l'axe de visée est orienté vers l'ouverture,
- un écran de visualisation, et
- une unité de traitement agencée pour recevoir une image capturée par le moyen de capture et l'envoyer à l'écran de visualisation qui l'affiche.

Ainsi, en passant l'appareil sur la feuille adhésive, les éventuelles bulles apparaissent à l'écran et le technicien peut alors détecter les endroits où il est nécessaire de corriger le collage.

Dans le cas où le système de visualisation est utilisé sur une feuille adhésive dont les bulles ont été retirées (suite à une réparation au sol, après un premier vol de l'aéronef), et où aucune bulle n'apparait à l'écran, le technicien peut en conclure que la réparation de la feuille adhésive a été correctement effectuée, et qu'un vol supplémentaire de l'aéronef n'est pas nécessaire. Si des bulles apparaissent à l'écran, le technicien peut alors détecter les endroits où il est nécessaire de corriger à nouveau le collage.

Avantageusement, le moyen de dépression comporte un réservoir à vide, une canalisation d'aspiration reliant fluidiquement le réservoir à vide au volume intérieur, une pompe à vide fluidiquement reliée au réservoir à vide, et une vanne installée sur la canalisation d'aspiration et mobile entre une position ouverte dans laquelle le réservoir à vide et le volume intérieur sont en communication fluidique, et une position fermée dans laquelle le réservoir à vide et le volume intérieur sont fluidiquement isolés l'un de l'autre, et où la vanne est électriquement commandée en position par l'unité de traitement.

Avantageusement, le système de visualisation comporte une pluralité de sources lumineuses réparties à l'intérieur de la paroi latérale autour de l'ouverture au pied de la paroi latérale et où chaque source lumineuse est commandée en allumage et en extinction par l'unité de traitement.

Avantageusement, les sources lumineuses sont des Diodes Electroluminescentes.

Avantageusement, pour chaque source lumineuse, le système de visualisation comporte un premier cache opaque agencé entre la source lumineuse et le moyen de capture.

Avantageusement, le plafond est transparent et porte sur sa face orientée vers le volume intérieur, des motifs géométriques, et le système de visualisation comporte au moins une source lumineuse agencée au niveau du plafond et au-dessus des motifs géométriques de manière à diffuser la lumière vers le volume intérieur à travers les motifs géométriques et où la ou chaque source lumineuse est commandée en allumage et en extinction par l'unité de traitement.

Avantageusement, le système de visualisation comporte un deuxième cache opaque agencé autour du moyen de capture entre la source lumineuse et le moyen de capture.

Avantageusement, la surface intérieure de la paroi latérale est recouverte d'une surface miroir.

Avantageusement, la surface miroir est recouverte d'un écran à cristaux liquides dont l'opacité est commandée électroniquement par l'unité de traitement.

Avantageusement, le système de visualisation comporte une carte électronique disposée sur la paroi latérale et connectée à l'unité de traitement, au moyen de capture et aux sources lumineuses. La carte électronique est configurée pour recevoir une image capturée par le moyen de capture et l'envoyer à l'unité de traitement, et pour commander en allumage et en extinction les sources lumineuses, sur commande de l'unité de traitement.

Avantageusement, la surface intérieure de la paroi latérale est recouverte d'une doublure réalisée dans un matériau anti-réflexion.

Selon l'invention, le système de visualisation comporte un premier joint qui s'étend autour de l'ouverture au pied de la paroi latérale et un second joint agencé au pied de la paroi latérale et à l'extérieur de la cloche.

Avantageusement, le système de visualisation comporte une poignée fixée au-dessus du plafond et des renforts métalliques agencés entre la poignée et la cloche.

Avantageusement, le système de visualisation comporte une vanne de protection agencée sur la cloche et configurée pour être en position fermée lorsque que la pression dans le volume intérieur est supérieure à un seuil de pression prédéterminé, et pour être en position ouverte lorsque la pression dans le volume intérieur est inférieure ou égale au seuil de pression prédéterminé.

L'invention concerne également un procédé de visualisation, au moyen d'un système de visualisation selon l'invention, comportant les étapes consistant à :
- placer l'ouverture de la cloche sur une feuille adhésive qui est collée sur un panneau ;
- réaliser une dépression dans le volume intérieur, au moyen du moyen de dépression ;
- capturer au moins une image de la feuille, au moyen du moyen de capture ;
- transmettre la au moins une image capturée à l'unité de traitement ;
- envoyer la au moins une image transmise à l'écran de visualisation ; et
- afficher la au moins une image envoyée sur l'écran de visualisation.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la figure 1 est une vue en perspective d'un système de visualisation selon un mode de réalisation qui n'est pas couvert par les revendications, mais utile pour comprendre l'invention, et
la figure 2 est une vue schématique en coupe d'un système de visualisation selon un mode de réalisation de l'invention.

### EXPOSE DETAILLE DE MODES DE REALISATION

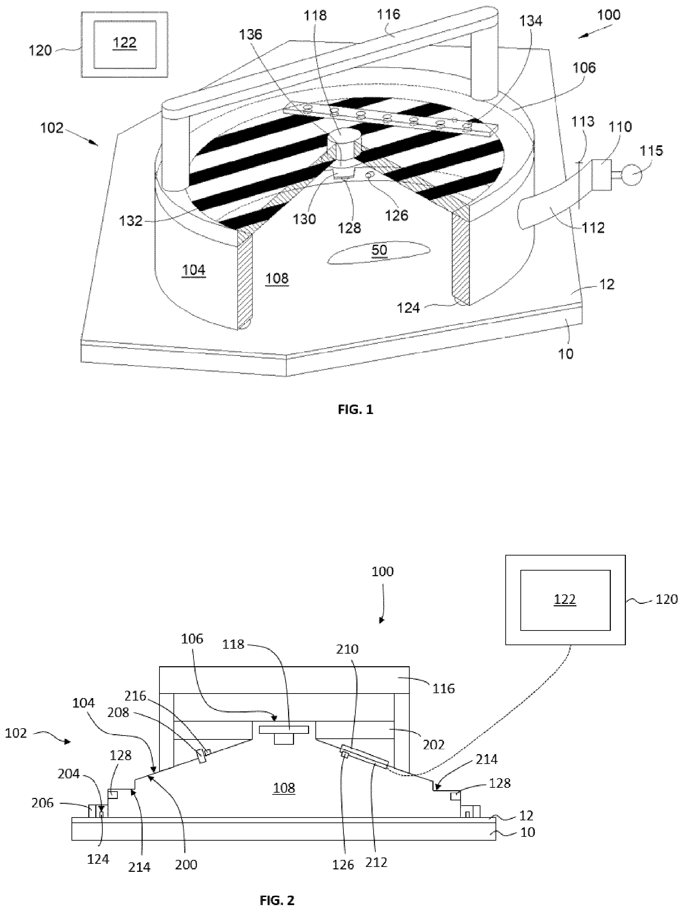

La figure 1 montre un système de visualisation 100 qui permet de visualiser une bulle 50 présente entre un panneau 10 et une feuille 12 adhésive collée sur le panneau 10. Sur la figure 1, le système de visualisation 100 a été découpé pour montrer l'intérieur.

Dans la suite de la description, le système de visualisation 100 est mis en œuvre dans le cadre d'un aéronef, mais il peut être mis en œuvre dans d'autres types d'installations, en particulier dans les installations qui fonctionnent à des pressions inférieures à la pression au sol.

Le système de visualisation 100 comporte une cloche 102 qui est ici cylindrique mais pourrait prendre une autre forme comme par exemple parallélépipédique, ou pyramidale.

La cloche 102 comporte une paroi latérale 104 et un plafond 106 fixé en partie haute de la paroi latérale 104 pour délimiter entre eux un volume intérieur 108 ouvert à l'opposé du plafond 106, ici vers le bas. La cloche 102 présente ainsi une ouverture à l'opposé du plafond 106.

La cloche 102 est fabriquée par impression en trois-dimensions (3D) d'un matériau chargé en billes de verre. La cloche 102 est ainsi résistante.

Le système de visualisation 100 comporte également un moyen de dépression qui permet de réaliser une dépression dans le volume intérieur 108. La dépression doit être suffisante pour reproduire la pression d'un aéronef en vol. Le système de visualisation 100 comporte une poignée 116 fixée au-dessus du plafond 106 pour permettre la prise en main par un technicien.

Lors de son utilisation, l'ouverture de la cloche 102, c'est-à-dire la partie inférieure de la paroi latérale 104, est appliquée contre la feuille 12 et maintenue par le technicien.

Le moyen de dépression est alors mis en action pour réduire la pression dans le volume intérieur 108 et si le collage de la feuille 12 est défectueux, une bulle 50 va se former dans le volume intérieur 108.

Le système de visualisation 100 comporte également un moyen de capture 118, typiquement une caméra, agencé au niveau du plafond 106 et dont l'axe de visée est orienté vers l'ouverture. Le moyen de capture 118 est disposé ici au centre du plafond 106.

Le moyen de capture 118 est prévu pour prendre au moins une image de la feuille 12 vue à l'intérieur de la cloche 102.

Le système de visualisation 100 comporte également une unité de traitement 120, du type comportant les éléments suivants, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD (« Secure Digital » en anglais) ; au moins une interface de communication, permettant par exemple à l'unité de traitement de communiquer avec le moyen de capture 118 par liaisons filaire ou sans fil.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ci-dessous.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

Le système de visualisation 100 comporte également un écran de visualisation 122 qui est ici intégré à l'unité de traitement 120 et en communication avec elle.

L'unité de traitement 120 peut être intégrée à un ordinateur portable, à une tablette, ou à un téléphone mobile (« smartphone » en anglais).

L'unité de traitement 120 peut ainsi recevoir l'image capturée par le moyen de capture 118 et l'envoyer à l'écran de visualisation 122 pour l'afficher. Le technicien peut alors vérifier si une bulle apparaît sur l'écran de visualisation 122 et la réparation appropriée peut alors être réalisée. Si aucune bulle n'apparaît, le technicien peut en conclure qu'il n'est pas nécessaire de faire ou refaire voler l'aéronef, le collage de la feuille adhésive 12 sur le panneau 10 étant correct.

Pour assurer une bonne étanchéité avec la feuille 12 autour de l'ouverture, la paroi latérale 104 est équipée d'un joint 124, par exemple en néoprène, qui s'étend autour de l'ouverture au pied de la paroi latérale 104.

Selon un mode de réalisation particulier, le moyen de dépression comporte une pompe qui aspire l'air présent dans le volume intérieur 108 par une canalisation d'aspiration fluidiquement connectée audit volume intérieur 108 à travers un orifice traversant la paroi latérale 104. La pompe peut être une pompe manuelle installée sur la poignée 116 et actionnée par le technicien ou une pompe électrique commandée par le technicien depuis l'unité de contrôle 120. Le moyen de dépression peut comporter à la fois une pompe manuelle installée sur la poignée 116 et actionnable manuellement par le technicien, et une pompe électrique dont la commande est réalisable par le technicien depuis l'unité de contrôle 120. Le technicien peut alors choisir quelle pompe il souhaite utiliser.

Dans le mode de réalisation présenté sur la figure 1, le moyen de dépression comporte un réservoir à vide 110 fluidiquement connecté au volume intérieur 108 par une canalisation d'aspiration 112 à travers un orifice traversant la paroi latérale 104. Le moyen de dépression comporte également une pompe à vide 115 fluidiquement reliée au réservoir à vide 110 pour aspirer l'air dudit réservoir à vide 110 et le maintenir sous vide. Le moyen de dépression comporte également une vanne 113 installée sur la canalisation d'aspiration 112, et qui est mobile entre une position ouverte et une position fermée. En position ouverte, le réservoir à vide 110 et le volume intérieur 108 sont en communication fluidique et en position fermée, le réservoir à vide 110 et le volume intérieur 108 sont fluidiquement isolés l'un de l'autre. La vanne 113 est électriquement commandée en position par l'unité de traitement 120 qui peut ainsi la faire passer de la position fermée à la position ouverte et inversement.

Ainsi, à partir de la position fermée, le réservoir à vide 110 est sous vide, et lorsque l'unité de traitement 120 commande l'ouverture de la vanne 113, au moins une partie de l'air du volume intérieur 108 est brusquement aspirée dans le réservoir à vide 110, créant ainsi rapidement une dépression dans le volume intérieur 108.

Le moyen de dépression peut comporter une vanne de protection (non représentée sur la figure 1) contre une sous-pression dans le volume intérieur 108. La vanne de protection est agencée sur la cloche 102 et permettant de limiter la dépression dans le volume intérieur 108. Plus précisément, la vanne est configurée pour être fermée tant que la pression dans le volume intérieur 108 est supérieure à un seuil de pression prédéterminé, et pour s'ouvrir lorsque la pression dans le volume intérieur 108 devient inférieure ou égale au seuil de pression prédéterminé.

Dans le mode de réalisation de l'invention présenté sur la figure 1, le réservoir à vide 110 et la pompe 115 sont à l'extérieur, mais ils peuvent être installés dans la poignée 116 par exemple. Selon un autre mode de réalisation, le réservoir à vide 110 est installé dans la poignée 116 et la pompe 115 sur l'unité de traitement 120, une liaison pneumatique s'étend alors entre l'unité de traitement 120 et la poignée 116. Selon un autre mode de réalisation, le réservoir à vide 110 et la pompe 115 sont installés sur l'unité de traitement 120 et la canalisation d'aspiration 112 s'étend alors entre l'unité de traitement 120 et le volume intérieur 108.

Le système de visualisation 100 comporte un capteur de pression 126 qui est arrangé sur la cloche 102 de manière à mesurer la pression dans le volume intérieur 108. L'information de pression recueillie par le capteur de pression 126 est transmise à l'unité de traitement 120 qui peut l'afficher sur l'écran de visualisation 122 et, si besoin, peut s'en servir pour commander le moyen de dépression afin que la pression dans le volume intérieur 108 atteigne une valeur de consigne enregistrée dans une mémoire de l'unité de traitement 120.

Le système de visualisation 100 peut comporter un deuxième écran de visualisation (non représenté sur la figure 1), agencé sur la cloche 102. L'information de pression recueillie par le capteur de pression 126 peut alors être directement affichée sur ce deuxième écran de visualisation.

Pour affiner les résultats de détection d'une bulle 50, l'unité de traitement 120 comporte des moyens, en particulier logiciels, pour traiter chaque image capturée par le moyen de capture 118.

D'une manière générale, les feuilles 12 peuvent être classées en deux catégories, à savoir celles avec des couleurs claires et celles avec des couleurs sombres.

Dans le cas d'une feuille claire, il est préférable d'utiliser la technique d'ombroscopie et dans le cas d'une feuille sombre, il est préférable d'utiliser la technique de déflectométrie. Selon le type de feuille 12 à analyser, le système de visualisation 100 peut être équipé pour utiliser l'une ou l'autre des techniques et préférentiellement, il est équipé pour utiliser les deux techniques au choix du technicien.

Pour utiliser la technique d'ombroscopie, le système de visualisation 100 comporte une pluralité de sources lumineuses 128, par exemple des Diodes ElectroLuminescentes (DEL), réparties à l'intérieur de la paroi latérale 104 autour de l'ouverture au pied de la paroi latérale 104. Préférentiellement, il y a quatre sources lumineuses 128 réparties dans chaque quadrant du volume intérieur 108. Les sources lumineuses 128 éclairent la feuille 12 en incidence rasante pour faire apparaître les ombres des bulles.

Chaque source lumineuse 128 est commandée en allumage et en extinction par l'unité de traitement 120 et les sources lumineuses 128 sont agencées pour éclairer au ras de la feuille 12 pour générer une ombre de la bulle 50. Les sources lumineuses 128 sont commandées en allumage et en extinction de sorte que lorsqu'une source lumineuse 128 est allumée, les autres sources lumineuses 128 sont éteintes.

Pour éviter un éclairement direct du moyen de capture 118 par les sources lumineuses 128, le système de visualisation 100 comporte pour chaque source lumineuse 128, un premier cache 130 opaque qui vient entre la source lumineuse 128 et le moyen de capture 118. Le premier cache 130 est ici solidaire de la paroi latérale 104.

Une fois le système de visualisation 100 disposé sur la feuille 12 et une fois que la pression à l'intérieur de la cloche 102 atteint la pression souhaitée, la capture d'images par le moyen de capture 118 consiste à allumer successivement chaque source lumineuse 128 et à capturer une image de la feuille 12 à chaque allumage. L'unité de traitement 120 comporte alors les moyens pour traiter les images ainsi capturées selon la technique d'ombroscopie. Une technique d'ombroscopie est notamment décrite dans le document « Shape from Shading » de Emmanuel Prados et Olivier Faugeras, du 21 avril 2009, et accessible sur https://hal.inria.fr/inria-00377417.

D'une manière générale, la technique d'ombroscopie consiste à réaliser un éclairage rasant de la surface, de manière à faire apparaître des ombres lorsque la surface présente des reliefs. Il est possible de comparer les images ainsi capturées à une image de référence sans relief, c'est-à-dire ici sans bulle. L'image de référence est préalablement capturée sur une portion de la feuille 12 qui ne présente pas de bulles. L'utilisation d'une image de référence permet avantageusement de s'affranchir de défauts d'éclairage et de reflets spéculaires indésirables. L'utilisation d'une image de référence est optionnelle, car il est possible de créer mathématiquement une image de référence à partir des lois de l'optique.

Par exemple, un flou léger est appliqué à chaque image capturée, un calcul du gradient selon deux directions du plan est appliqué à chaque image capturée, et les images sont combinées en une nouvelle image en niveau de gris affichée sur l'écran de visualisation 122 et où le niveau de gris est directement lié à la hauteur de la bulle 50. L'image résultante est affichée sur l'écran de visualisation 122 avec une échelle de niveau de gris indiquant la présence éventuelle d'un défaut, et même les dimensions de ce défaut.

Pour utiliser la technique de déflectométrie, le plafond 106 est transparent et porte sur sa face inférieure orientée vers le volume intérieur 108, des motifs géométriques 132, ici des bandes parallèles et le système de visualisation 100 comporte au moins une source lumineuse 134, par exemple une Diode ElectroLuminescente (DEL), agencée au niveau du plafond 106 et au-dessus des motifs géométriques 132, de manière à diffuser la lumière vers le volume intérieur 108 à travers les motifs géométriques 132.

Les sources lumineuses 134 éclairent donc par derrière les motifs géométriques 132, qui transmettent la lumière de manière diffuse. Une seule source lumineuse 134 peut être suffisante pour éclairer la totalité des motifs géométriques 132, ou il peut être nécessaire d'avoir une pluralité de sources lumineuses 134 positionnées de manière à ce que tous les motifs géométriques 132 soient éclairés.

Dans le mode de réalisation de l'invention présenté sur la figure 1, il y a une barrette de sources lumineuses 134 disposée au-dessus du plafond 106, mais il est possible de mettre en place plusieurs de ces barrettes pour une meilleure répartition de la lumière. Il est également possible de prévoir une barrette de plus grandes dimensions permettant de couvrir l'intégralité du plafond 106 en prenant une forme circulaire ou rectangulaire.

Les motifs géométriques 132 sont alors projetés sur la feuille 12.

Chaque source lumineuse 134 est commandée en allumage et en extinction par l'unité de traitement 120.

Pour éviter un éclairement direct du moyen de capture 118 par les sources lumineuses 134, le système de visualisation 100 comporte un deuxième cache 136 opaque qui vient autour du moyen de capture 118 entre les sources lumineuses 134 et le moyen de capture 118. Le deuxième cache 136 prend ici la forme d'un pare-soleil pour objectif.

Une fois le système de visualisation 100 disposé sur la feuille 12 et une fois que la pression à l'intérieur de la cloche 102 atteint la pression souhaitée, la capture d'images par le moyen de capture 118 consiste à allumer les sources lumineuses 134 et à capturer une image de la feuille 12. L'unité de traitement 120 comporte alors les moyens pour traiter l'image ainsi capturée selon la technique de déflectométrie. Une technique de déflectométrie est notamment décrite dans le document « Single-shot deflectometry for dynamic 3D surface profile measurement by modified spatial-carrier frequency phase-shifting method » de Manh The Nguyen, Young-Sik Ghim et Hyug-Gyo Rhee publié le 28 février 2019 et accessible sur https://www.nature.com/articles/s41598-019-39514-6.

D'une manière générale, la technique de déflectométrie consiste à repérer une déformation des motifs géométriques 132 dans l'image ainsi capturée.

Par exemple, un filtre est appliqué à l'image capturée, les motifs géométriques projetés sont identifiés sur l'image capturée, et les déformations desdits motifs géométriques projetés sont alors repérées et permettent une reconstruction en trois-dimensions de la surface de la feuille 12, à partir de laquelle la détection de bulles est effectuée.

La surface intérieure de la paroi latérale 104, c'est-à-dire celle orientée vers le volume intérieur 108, est de préférence recouverte d'une surface miroir. Ceci permet aux motifs géométriques 132 de se refléter sur la paroi latérale 104, et ainsi de pouvoir utiliser la technique de déflectométrie sur toute la surface de la feuille 12 à inspecter.

Pour limiter l'impact de la surface miroir, lors du traitement par ombroscopie, la surface miroir est recouverte d'un écran à cristaux liquides dont l'opacité est commandée électroniquement par l'unité de traitement 120.

Le système de visualisation selon l'invention permet ainsi de détecter des bulles sur des feuilles de panneau d'aéronef en utilisant une technique d'ombroscopie et/ou une technique de déflectométrie.

La figure 2 montre un autre mode de réalisation d'un système de visualisation 100 qui permet de visualiser une bulle présente entre un panneau 10 et une feuille 12 adhésive collée sur le panneau 10.

Le système de visualisation 100 comporte une cloche 102, qui est ici de forme pyramidale, et comporte quatre parois latérales 104 et un plafond 106 fixé en partie haute de chaque paroi latérale 104 pour délimiter entre eux un volume intérieur 108 ouvert à l'opposé du plafond 106.

La surface intérieure de la paroi latérale 104 et le plafond 106 sont recouverts d'une doublure 200 réalisée dans un matériau anti-réflexion. Ainsi, la doublure 200 permet d'éviter la réflexion de la lumière issue des sources lumineuses 128 dans la cloche 102.

Le système de visualisation 100 comporte ici quatre sources lumineuses 128 réparties à chaque angle de la forme pyramidale de la cloche 102, c'est-à-dire au niveau de chaque jonction entre deux parois latérales 104 adjacentes, à l'intérieur de chaque paroi latérale 104, autour de l'ouverture au pied de chaque paroi latérale 104. Chaque source lumineuse 128 est disposée à environ 1 cm de la feuille 12 à visualiser.

Pour éviter un éclairement direct du moyen de capture 118 par les sources lumineuses 128, pour chaque source lumineuse 128, une partie de chaque paroi latérale 104 forme un cache 214 qui vient entre la source lumineuse 128 et le moyen de capture 118. La forme pyramidale de la cloche 102 permet à la partie de chaque paroi latérale 104 de former le cache 214.

Le système de visualisation 100 comporte également une poignée 116 fixée au-dessus du plafond 106. Des renforts 202, réalisés en matériau métallique, sont agencés entre la poignée 116 et la cloche 102. Les renforts 202 permettent à la poignée 116 de résister aux efforts mécaniques qu'elle subit lors de la réalisation de la dépression.

Le moyen de dépression comporte une vanne de protection 208 permettant de protéger la cloche 102 contre une sous-pression dans le volume intérieur 108.

Le système de visualisation 100 comporte également un indicateur 216 configuré pour passer d'une position inactive à une position active lorsque la vanne de protection 208 passe de sa position fermée à sa position ouverte. L'indicateur 216 peut être une source lumineuse, telle qu'une Diode Electroluminescente, qui est éteinte en position inactive, et qui s'allume en position active. L'indicateur 216 permet ainsi à l'utilisateur du système de visualisation 100 de voir que la vanne de protection 208 s'est ouverte, et donc qu'il y a une sous-pression dans le volume intérieur 108.

Pour assurer une bonne étanchéité entre la cloche 102 et la feuille 12, la paroi latérale 104 est équipée d'un premier joint 124, qui s'étend dans une rainure 204 formée au pied de la paroi latérale 104.

Le système de visualisation 100 comporte également un second joint 206, agencé au pied de la paroi latérale 104, à l'extérieur de la cloche 102. Le second joint 206 permet d'éviter au système de visualisation 100 de laisser des traces sur la feuille 12 lors de la réalisation de la dépression.

Le système de visualisation 100 comporte également une carte électronique 212, disposée à l'intérieur de la cloche 102, sur une paroi latérale 104. La carte électronique 212 comporte le capteur de pression 126. La carte électronique 212 est connectée à l'unité de traitement 120, au moyen de capture 118 et aux sources lumineuses 128. La carte électronique 212 est reliée à l'unité de traitement 120 de préférence par une connexion USB. La carte électronique 212 est configurée pour alimenter en énergie les sources lumineuses 128 et le moyen de capture 118. La carte électronique 21 est également configurée pour contrôler les sources lumineuses 128 et le moyen de capture 118, sur instructions de l'unité de traitement 120.

Le système de visualisation 100 comporte un deuxième écran de visualisation 210, agencé sur la cloche 102, et connecté au capteur de pression 216. La mesure de la pression dans le volume intérieur 108 est réalisée en temps réel, et affichée en temps réel sur le deuxième écran de visualisation 210.

Un procédé de visualisation mettant en œuvre le système de visualisation 100 décrit ci-dessus comporte les étapes consistant à :
- placer l'ouverture de la cloche 102 sur la feuille 12 adhésive qui est collée sur un panneau 10, en particulier d'un aéronef ;
- réaliser une dépression dans le volume intérieur 108, au moyen du moyen de dépression;
- capturer au moins une image de la feuille 12, au moyen du moyen de capture 118 ;
- transmettre la au moins une image capturée à l'unité de traitement 120 ;
- envoyer la au moins une image transmise à l'écran de visualisation 122 ; et
- afficher la au moins une image envoyée sur l'écran de visualisation 122.

## Revendications

1. Système de visualisation (100) comportant :
- une cloche (102) comportant au moins une paroi latérale (104) et un plafond (106) fixé en partie haute de la paroi latérale (104) pour délimiter entre eux un volume intérieur (108) où la cloche (102) présente une ouverture à l'opposé du plafond (106),
- un moyen de dépression configuré pour réaliser une dépression dans le volume intérieur (108),
- un moyen de capture (118) agencé au niveau du plafond (106) et dont l'axe de visée est orienté vers l'ouverture,
- un écran de visualisation (122), et
- une unité de traitement (120) agencée pour recevoir une image capturée par le moyen de capture (118) et l'envoyer à l'écran de visualisation (122) qui l'affiche, et
**caractérisé en ce que** le système de visualisation (100) comporte un premier joint (124) qui s'étend dans une rainure (204) formée au pied de la paroi latérale (104) et un second joint (206) agencé au pied de la paroi latérale (104) et à l'extérieur de la cloche (102).

2. Système de visualisation (100) selon la revendication 1, **caractérisé en ce que** le moyen de dépression comporte un réservoir à vide (110), une canalisation d'aspiration (112) reliant fluidiquement le réservoir à vide (110) au volume intérieur (108), une pompe à vide (115) fluidiquement reliée au réservoir à vide (110), et une vanne (113) installée sur la canalisation d'aspiration (112) et mobile entre une position ouverte dans laquelle le réservoir à vide (110) et le volume intérieur (108) sont en communication fluidique, et une position fermée dans laquelle le réservoir à vide (110) et le volume intérieur (108) sont fluidiquement isolés l'un de l'autre, et où la vanne (113) est électriquement commandée en position par l'unité de traitement (120).

3. Système de visualisation (100) selon l'une des revendications 1 ou 2, **caractérisé en ce qu'**il comporte une pluralité de sources lumineuses (128) réparties à l'intérieur de la paroi latérale (104) autour de l'ouverture au pied de la paroi latérale (104) et où chaque source lumineuse (128) est commandée en allumage et en extinction par l'unité de traitement (120).

4. Système de visualisation (100) selon la revendication 3, **caractérisé en ce que** les sources lumineuses (128) sont des Diodes Electroluminescentes.

5. Système de visualisation (100) selon l'une des revendications 3 ou 4, **caractérisé en ce que**, pour chaque source lumineuse (128), le système de visualisation (100) comporte un premier cache (130) opaque agencé entre la source lumineuse (128) et le moyen de capture (118).

6. Système de visualisation (100) selon l'une des revendications 1 à 5, **caractérisé en ce que** le plafond (106) est transparent et porte sur sa face orientée vers le volume intérieur (108), des motifs géométriques (132), et **en ce que** le système de visualisation (100) comporte au moins une source lumineuse (134) agencée au niveau du plafond (106) et au-dessus des motifs géométriques (132) de manière à diffuser la lumière vers le volume intérieur (108) à travers les motifs géométriques (132) et où la ou chaque source lumineuse (134) est commandée en allumage et en extinction par l'unité de traitement (120).

7. Système de visualisation (100) selon la revendication 6, **caractérisé en ce qu'**il comporte un deuxième cache (136) opaque agencé autour du moyen de capture (118) entre la source lumineuse (134) et le moyen de capture (118).

8. Système de visualisation (100) selon l'une des revendications 6 ou 7, **caractérisé en ce que** la surface intérieure de la paroi latérale (104) est recouverte d'une surface miroir.

9. Système de visualisation (100) selon la revendication 7, **caractérisé en ce que** la surface miroir est recouverte d'un écran à cristaux liquides dont l'opacité est commandée électroniquement par l'unité de traitement (120).

10. Système de visualisation (100) selon l'une des revendications 3 à 9, **caractérisé en ce que** le système de visualisation (100) comporte une carte électronique (212), disposée sur la paroi latérale (104) et connectée à l'unité de traitement (120), au moyen de capture (118) et aux sources lumineuses (128, 134), la carte électronique (212) étant configurée pour recevoir une image capturée par le moyen de capture (118) et l'envoyer à l'unité de traitement (120), et pour commander en allumage et en extinction les sources lumineuses (128, 134), sur commande de l'unité de traitement (120).

11. Système de visualisation (100) selon l'une des revendications 1 à 7, ou selon la revendication 10 en combinaison avec l'une des revendications 3 à 7, **caractérisé en ce que** la surface intérieure de la paroi latérale (104) est recouverte d'une doublure (200) réalisée dans un matériau anti-réflexion.

12. Système de visualisation (100) selon l'une des revendications 1 à 11, **caractérisé en ce que** le système de visualisation (100) comporte une poignée (116) fixée au-dessus du plafond (106) et des renforts (202) métalliques agencés entre la poignée (116) et la cloche (102).

13. Système de visualisation (100) selon l'une des revendications 1 à 12, **caractérisé en ce que** le système de visualisation (100) comporte une vanne de protection (208) agencée sur la cloche (102) et configurée pour être en position fermée lorsque que la pression dans le volume intérieur (108) est supérieure à un seuil de pression prédéterminé, et pour être en position ouverte lorsque la pression dans le volume intérieur (108) est inférieure ou égale au seuil de pression prédéterminé.

14. Procédé de visualisation, au moyen d'un système de visualisation (100) selon l'une des revendications 1 à 13, **caractérisé en ce qu'**il comporte les étapes consistant à :
- placer l'ouverture de la cloche (102) sur une feuille (12) adhésive qui est collée sur un panneau (10) ;
- réaliser une dépression dans le volume intérieur (108), au moyen du moyen de dépression ;
- capturer au moins une image de la feuille (12), au moyen du moyen de capture (118) ;
- transmettre la au moins une image capturée à l'unité de traitement (120) ;
- envoyer la au moins une image transmise à l'écran de visualisation (122) ; et
- afficher la au moins une image envoyée sur l'écran de visualisation (122).

## Patentansprüche

1. System zur Sichtbarmachung (100), umfassend:
- eine Glocke (102), die mindestens eine Seitenwand (104) und eine Decke (106), die am oberen Teil der Seitenwand (104) befestigt ist, umfasst, um zwischen ihnen ein Innenvolumen (108) zu begrenzen, wobei die Glocke (102) gegenüber der Decke (106) eine Öffnung aufweist,
- ein Unterdruckmittel, das dazu konfiguriert ist, in dem Innenvolumen (108) einen Unterdruck zu erzeugen,
- ein Erfassungsmittel (118), das an der Decke (106) eingerichtet ist und dessen Sichtachse zu der Öffnung hin gerichtet ist,
- einen Bildschirm (122) und
- eine Verarbeitungseinheit (120), die dazu eingerichtet ist, ein durch das Erfassungsmittel (118) erfasstes Bild zu empfangen und es an den Bildschirm (122) zu senden, welcher es anzeigt, und
**dadurch gekennzeichnet, dass** das System zur Sichtbarmachung (100) eine erste Dichtung (124), die sich in einer Rille (204), die am Fuß der Seitenwand (104) gebildet ist, erstreckt, und eine zweite Dichtung (206), die am Fuß der Seitenwand (104) und auf der Außenseite der Glocke (102) eingerichtet ist, umfasst.

2. System zur Sichtbarmachung (100) nach Anspruch 1, **dadurch gekennzeichnet, dass** das Unterdruckmittel einen Vakuumbehälter (110), eine Ansaugleitung (112), die den Vakuumbehälter (110) fluidisch mit dem Innenvolumen (108) verbindet, eine Vakuumpumpe (115), die mit dem Vakuumbehälter (110) fluidisch verbunden ist, und ein Ventil (113), das in der Ansaugleitung (112) installiert und zwischen einer offenen Stellung, in der der Vakuumbehälter (110) und das Innenvolumen (108) in Fluidkommunikation stehen, und einer geschlossenen Stellung, in der der Vakuumbehälter (110) und das Innenvolumen (108) fluidisch voneinander isoliert sind, beweglich ist, umfasst, und wobei die Stellung des Ventils (113) durch die Verarbeitungseinheit (120) elektrisch gesteuert wird.

3. System zur Sichtbarmachung (100) nach einem der Ansprüche 1 oder 2, **dadurch gekennzeichnet, dass** es eine Vielzahl von Lichtquellen (128) umfasst, die auf der Innenseite der Seitenwand (104) um die Öffnung herum am Fuß der Seitenwand (104) verteilt sind, und wobei jede Lichtquelle (128) durch die Verarbeitungseinheit (120) ein- und ausgeschaltet wird.

4. System zur Sichtbarmachung (100) nach Anspruch 3, **dadurch gekennzeichnet, dass** die Lichtquellen (128) Leuchtdioden sind.

5. System zur Sichtbarmachung (100) nach einem der Ansprüche 3 oder 4, **dadurch gekennzeichnet, dass** das System zur Sichtbarmachung (100) für jede Lichtquelle (128) eine erste lichtundurchlässige Abdeckung (130) umfasst, die zwischen der Lichtquelle (128) und dem Erfassungsmittel (118) eingerichtet ist.

6. System zur Sichtbarmachung (100) nach einem der Ansprüche 1 bis 5, **dadurch gekennzeichnet, dass** die Decke (106) transparent ist und an ihrer zum Innenvolumen (108) hin gerichteten Fläche geometrische Muster (132) trägt und dass das System zur Sichtbarmachung (100) mindestens eine Lichtquelle (134) umfasst, die im Bereich der Decke (106) und oberhalb der geometrischen Muster (132) eingerichtet ist, um das Licht durch die geometrischen Muster (132) hindurch zu dem Innenvolumen (108) hin zu verteilen, und wobei die oder jede Lichtquelle (134) durch die Verarbeitungseinheit (120) ein- und ausgeschaltet wird.

7. System zur Sichtbarmachung (100) nach Anspruch 6, **dadurch gekennzeichnet, dass** es eine zweite lichtundurchlässige Abdeckung (136) umfasst, die zwischen der Lichtquelle (134) und dem Erfassungsmittel (118) um das Erfassungsmittel (118) herum eingerichtet ist.

8. System zur Sichtbarmachung (100) nach einem der Ansprüche 6 oder 7, **dadurch gekennzeichnet, dass** die Innenoberfläche der Seitenwand (104) von einer Spiegeloberfläche bedeckt ist.

9. System zur Sichtbarmachung (100) nach Anspruch 7, **dadurch gekennzeichnet, dass** die Spiegeloberfläche von einem Flüssigkristallschirm bedeckt ist, dessen Lichtundurchlässigkeit durch die Verarbeitungseinheit (120) elektronisch gesteuert wird.

10. System zur Sichtbarmachung (100) nach einem der Ansprüche 3 bis 9, **dadurch gekennzeichnet, dass** das System zur Sichtbarmachung (100) eine Leiterplatte (212) umfasst, die an der Seitenwand (104) angeordnet ist und mit der Verarbeitungseinheit (120), dem Erfassungsmittel (118) und den Lichtquellen (128, 134) verbunden ist, wobei die Leiterplatte (212) dazu konfiguriert ist, ein durch das Erfassungsmittel (118) erfasstes Bild zu empfangen und es an die Verarbeitungseinheit (120) zu senden und die Lichtquellen (128, 134) auf Befehl der Verarbeitungseinheit (120) hin ein- und auszuschalten.

11. System zur Sichtbarmachung (100) nach einem der Ansprüche 1 bis 7 oder nach Anspruch 10 in Kombination mit einem der Ansprüche 3 bis 7, **dadurch gekennzeichnet, dass** die Innenoberfläche der Seitenwand (104) von einer Auskleidung (200) bedeckt ist, die aus einem Antireflexmaterial hergestellt ist.

12. System zur Sichtbarmachung (100) nach einem der Ansprüche 1 bis 11, **dadurch gekennzeichnet, dass** das System zur Sichtbarmachung (100) einen Griff (116), der oberhalb der Decke (106) befestigt ist, und Metallverstärkungen (202), die zwischen dem Griff (116) und der Glocke (102) eingerichtet sind, umfasst.

13. System zur Sichtbarmachung (100) nach einem der Ansprüche 1 bis 12, **dadurch gekennzeichnet, dass** das System zur Sichtbarmachung (100) ein Sicherheitsventil (208) umfasst, das an der Glocke (102) eingerichtet ist und dazu konfiguriert ist, sich in einer geschlossenen Stellung zu befinden, wenn der Druck in dem Innenvolumen (108) größer als ein vorbestimmter Schwellendruck ist, und sich in einer offenen Stellung zu befinden, wenn der Druck in dem Innenvolumen (108) kleiner als oder gleich dem vorbestimmten Schwellendruck ist.

14. Verfahren zur Sichtbarmachung mit Hilfe eines Systems zur Sichtbarmachung (100) nach einem der Ansprüche 1 bis 13, **dadurch gekennzeichnet, dass** es die Schritte umfasst, die aus Folgendem bestehen:
- Platzieren der Öffnung der Glocke (102) auf einer Klebefolie (12), die auf eine Platte (10) geklebt ist;
- Erzeugen eines Unterdrucks in dem Innenvolumen (108) mit Hilfe des Unterdruckmittels;
- Erfassen mindestens eines Bildes der Folie (12) mit Hilfe des Erfassungsmittels (118);
- Übertragen des mindestens einen erfassten Bildes an die Verarbeitungseinheit (120);
- Senden des mindestens einen übertragenen Bildes an den Bildschirm (122); und
- Anzeigen des mindestens einen gesendeten Bildes auf dem Bildschirm (122).

## Claims

1. Display system (100) having:
- a cloche (102) having at least one lateral wall (104) and a ceiling (106) fastened at the top part of the lateral wall (104) so as to delimit between them an internal volume (108) wherein the cloche (102) has an opening opposite the ceiling (106),
- a depressurizing means configured to create a depressurization in the internal volume (108),
- a capturing means (118) arranged at the ceiling (106) and of which the axis of sight is oriented towards the opening,
- a display screen (122), and
- a processing unit (120) arranged to receive an image captured by the capturing means (118) and send it to the display screen (122), which displays it, and
**characterized in that** the display system (100) has a first seal (124) that extends in a groove (204) formed at the foot of the lateral wall (104) and a second seal (206) arranged at the foot of the lateral wall (104) and outside the cloche (102).

2. Display system (100) according to Claim 1, **characterized in that** the depressurizing means has a vacuum tank (110), a suction pipeline (112) fluidically linking the vacuum tank (110) to the internal volume (108), a vacuum pump (115) fluidically linked to the vacuum tank (110), and a valve (113) installed on the suction pipeline (112) and able to move between an open position in which the vacuum tank (110) and the internal volume (108) are in fluidic communication, and a closed position in which the vacuum tank (110) and the internal volume (108) are fluidically isolated from one another, and wherein the position of the valve (113) is electrically controlled by the processing unit (120).

3. Display system (100) according to either of Claims 1 and 2, **characterized in that** it has a plurality of light sources (128) distributed inside the lateral wall (104) around the opening at the foot of the lateral wall (104) and wherein the switching on and switching off of each light source (128) is controlled by the processing unit (120).

4. Display system (100) according to Claim 3, **characterized in that** the light sources (128) are light-emitting diodes.

5. Display system (100) according to either of Claims 3 and 4, **characterized in that**, for each light source (128), the display system (100) has a first opaque cover (130) arranged between the light source (128) and the capturing means (118).

6. Display system (100) according to one of Claims 1 to 5, **characterized in that** the ceiling (106) is transparent and bears, on its face oriented towards the internal volume (108), geometric patterns (132), and **in that** the display system (100) has at least one light source (134) arranged at the ceiling (106) and above the geometric patterns (132) so as to diffuse the light towards the internal volume (108) through the geometric patterns (132) and wherein the switching on and switching off of the or each light source (134) is controlled by the processing unit (120).

7. Display system (100) according to Claim 6, **characterized in that** it has a second opaque cover (136) arranged around the capturing means (118) between the light source (134) and the capturing means (118).

8. Display system (100) according to either of Claims 6 and 7, **characterized in that** the internal surface of the lateral wall (104) is covered with a mirror surface.

9. Display system (100) according to Claim 7, **characterized in that** the mirror surface is covered with a liquid crystal screen of which the opacity is controlled electronically by the processing unit (120).

10. Display system (100) according to one of Claims 3 to 9, **characterized in that** the display system (100) has an electronic circuit board (212), disposed on the lateral wall (104) and connected to the processing unit (120), to the capturing means (118) and to the light sources (128, 134), the electronic circuit board (212) being configured to receive an image captured by the capturing means (118) and send it to the processing unit (120), and to control the switching on and switching off of the light sources (128, 134), on command from the processing unit (120).

11. Display system (100) according to one of Claims 1 to 7, or according to Claim 10 in combination with one of Claims 3 to 7, **characterized in that** the internal surface of the lateral wall (104) is covered with a lining (200) made of an anti-reflection material.

12. Display system (100) according to one of Claims 1 to 11, **characterized in that** the display system (100) has a handle (116) fastened on top of the ceiling (106) and metal reinforcements (202) arranged between the handle (116) and the cloche (102).

13. Display system (100) according to one of Claims 1 to 12, **characterized in that** the display system (100) has a protection valve (208) arranged on the cloche (102) and configured to be in a closed position when the pressure in the internal volume (108) is greater than a predetermined pressure threshold, and to be in an open position when the pressure in the internal volume (108) is less than or equal to the predetermined pressure threshold.

14. Method for displaying, by means of a display system (100) according to one of Claims 1 to 13, **characterized in that** it involves the steps consisting in:
- placing the opening of the cloche (102) on an adhesive sheet (12) that is adhesively bonded to a panel (10) ;
- creating a depressurization in the internal volume (108), by means of the depressurizing means;
- capturing at least one image of the sheet (12), by means of the capturing means (118);
- transmitting the at least one captured image to the processing unit (120);
- sending the at least one transmitted image to the display screen (122); and
- displaying the at least one sent image on the display screen (122).
